(19) Europäisches Patentamt
European Patent Office
Office européen des brevets

(11) EP 0 778 281 B1

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(51) Int Cl.[7]: **C07F 9/50**, C07F 9/48

(21) Anmeldenummer: **96118754.9**

(22) Anmeldetag: **22.11.1996**

(54) **Verfahren zur Herstellung methylenverbrückter Heteroverbindungen sowie neue Bis(diorganylphosphino)methane**

Process for the preparation of methylen-bridged hetero compounds and novel bis (diorganylphosphino) methanes

Procédé de préparation de composés renfermant des hétéroatomes et contenant un pont méthylène et nouveaux bis (diorganylphosphino) méthanes

(84) Benannte Vertragsstaaten:
**BE CH DE FR GB IT LI NL**

(30) Priorität: **29.11.1995 DE 19544448**

(43) Veröffentlichungstag der Anmeldung:
**11.06.1997 Patentblatt 1997/24**

(73) Patentinhaber: **BASF AKTIENGESELLSCHAFT**
**67056 Ludwigshafen (DE)**

(72) Erfinder:
- **Höhn, Arthur, Dr.**
  **67281 Kirchheim (DE)**
- **Wolf, Justin, Dr.**
  **97990 Weikersheim (DE)**

(56) Entgegenhaltungen:
**EP-A- 0 743 316** **EP-A- 0 743 336**
**DE-A- 2 658 127** **DE-A- 4 134 772**

- **Z. NATURFORSCH., B: ANORG. CHEM., ORG. CHEM. (ZNBAD2,03405087);83; VOL.38B (11); PP.1399-405, TECH. UNIV. MUENCHEN;ANORG.-CHEM. INST.; GARCHING; D-8046; FED. REP. GER. (DE), XP000618977 KARSCH H H ET AL: "Funktionelle Trimethylphosphanderivate, XVIII. Methyl(phosphinomethyl)silane und -stannane"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 778 281 B1

## Beschreibung

Die vorliegende Erfindung betrifft ein neues Verfahren zur Herstellung von methylenverbrückten Bisheteroatomverbindungen mit Heteroatomen aus der Gruppe 15 des Periodischen Systems der Elemente.

Weiterhin betrifft die Erfindung neue Bis(diorganylphosphino)methane.

Bis(dialkylphosphino)alkane und Bis(diarylphosphino)alkane bilden eine wichtige Ligandengruppe in der metallorganischen Chemie und sind insbesondere für metallorganische Katalysatoren von Interesse. So lassen sich aus Bis(diorganylphospino)methanen und Metallverbindungen Vierringchelate mit kleinen Phosphor-Metall-Phosphor-Winkeln herstellen. Solche Verbindungen, insbesondere solche mit den Metallen Kobalt, Rhodium, Iridium, Nickel, Palladium und Platin in den Oxidationsstufen 0 bis 3, sind gesuchte Verbindungen als Katalysatoren und als Zwischenstufen von Katalysecyclen. Die gesuchten Verbindungen dienen als Ligand für Übergangsmetalle für Homogenkatalysatoren bei Hydrierungen, Hydroformylierungen, Carbonylierungen sowie bei der Oligomerisation und Cooligomerisation ungesättigter Verbindungen.

Bis(diphosphino)methane tendieren jedoch dazu, statt der gesuchten Metallavierringe zwei- oder mehrkernige Komplexe auszubilden. Zur Stabilisierung mononuklearer Vierring-Chelatkomplexe sind daher maßgeschneiderte Bis(diphosphino)methane mit speziellen sterischen und elektronischen Eigenschaften erforderlich, um mehrkernige Strukturen zu destabilisieren.

Einer breiten technischen Anwendung von Bis(diorganylphosphino)methanen stand bisher die schwierige Zugänglichkeit dieser Verbindungen entgegen. So beschreibt Karsch (Z. Naturforsch. 38b (1983) 1027) die Synthese von Bis(di-tert.-butylphosphino)methan in unbefriedigenden Ausbeuten aus Bis(dichlorphosphino)methan und Tert.-butyllithium. In einer anderen Veröffentlichung (Z. Naturforsch. 38b, 1399 (1983)) berichten Karsch et al über die unerwartete Bildung von Tetramethyldiphosphinomethan bei der Umsetzung von 1,1-Dichloralkanen, wie Dichlormethan, 1,1-Dichlorethan oder Dimethyldichlormethan mit Lithiummethyl-dimethyl-phosphin. Die Bildung von Tetramethyldiphosphinomethan bei dieser Umsetzung wurde durch die NMR-spektroskopische Analyse der Reaktionsmischung nachgewiesen.

Bessere Ausbeuten werden gemäß der Lehre der DE-A 41 34 772 erzielt, wenn Di-tert.-butyl-chlorphosphan mit einem metallierten Di-tert.-butylphosphinomethan umgesetzt wird. Störend ist jedoch die Bildung von Tetraorganylbisphosphanen, wie sie vor allem bei anderen sterisch anspruchsvollen Liganden am Phosphor beobachtet wird, da diese Verbindungen sich nur äußerst aufwendig von den gesuchten Produkten abtrennen lassen.

DE-A 26 58 127 betrifft ein Verfahren zur Herstellung von Tetramethyldiphosphinomethan durch die Umsetzung von Lithiummethyl-dimethyl-phosphin mit Dimethylchlorphosphin oder, alternativ, die Umsetzung von Dilithiomethan oder Magnesiomethan mit Dimethylchlorphosphin.

Der vorliegenden Erfindung lag daher die Aufgabe zugrunde, ein Verfahren bereitzustellen, das die Herstellung von Bis(diorganylphosphino)methanen in guten Ausbeuten erlaubt. Weiterhin sollten Bis(diorganylphosphino) methane mit sterisch anspruchsvollen Liganden herstellbar sein, wobei Liganden mit optisch aktiven Zentren wegen der mit dieser Eigenschaft verknüpften besonderen Katalyseeigenschaften besonders gesucht waren. Schließlich sollten neue Bis(diorganylphosphino)methane bereitgestellt werden.

Demgemäß wurde ein Verfahren zur Herstellung von methylenverbrückten Verbindungen der Formel I gefunden

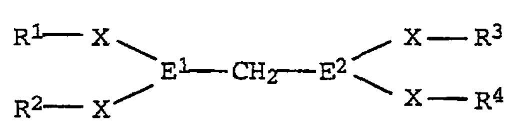

I

in der die Reste $R^1$ bis $R^4$ gleich oder verschieden sind und für gesättigte $C_1$-$C_{30}$-Kohlenwasserstoffreste, für Phenyl, für mit 1 bis 5 unter den Reaktionsbedingungen inerten Substituenten substituiertes Phenyl oder Wasserstoff stehen, in der die Reste $E^1$ und $E^2$ gleich oder verschieden sind und für Phosphor, Arsen oder Antimon stehen und in der X für eine chemische Bindung oder für Sauerstoff steht, das dadurch gekennzeichnet ist, daß man eine Zinnverbindung der allgemeinen Formel II

$$R^5_3Sn{-}CH_2M \qquad II$$

in der die Reste $R^5$ für einen $C_1$-$C_{20}$-Kohlenwasserstoffrest und M für ein Alkalimetall stehen, mit einer Verbindung der Formel III

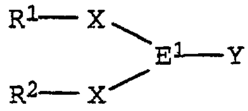

III

in der Y für ein Halogenatom steht, umsetzt, die so erhaltene Zinnverbindung der allgemeinen Formel IV

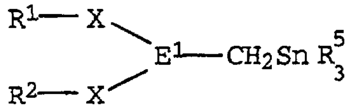

IV

mit einer Alkalimetallorganylverbindung metalliert und mit einer Verbindung der allgemeinen Formel V

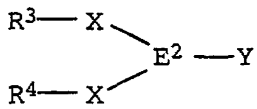

V

in der die Reste die oben angegebene Bedeutung haben, zu einer methylenverbrückten Verbindung der Formel I umsetzt.

Weiterhin wurden neue Bis(diorganylphosphino)methane gefunden.

Das erfindungsgemäße Verfahren ermöglicht die Herstellung von Verbindungen der Formel I. Die Substituenten haben folgende Bedeutung:

$R^1$-$R^4$: gesättigte $C_1$-$C_{30}$-Kohlenwasserstoffreste, bevorzugt $C_4$-$C_{14}$-Reste wie tert.-Butyl, tert.-Amyl und 2-Ethylhexyl; besonders bevorzugt sind Reste, die in beta-Stellung zum Heteroatom $E^1$ bzw. $E^2$ ein tertiäres Kohlenstoffatom tragen wie Menthyl, Longifolyl, alpha-Pinyl, beta-Pinyl, 3-Caryl und 2-Caryl; es kommen aber auch Phenylreste in Betracht, die ein bis fünf unter den Reaktionsbedingungen inerte Substituenten wie Halogen tragen können;

$E^1$, $E^2$: Phosphor, Arsen, Antimon, bevorzugt Phosphor; die Reste sind bevorzugt gleich;

X: chemische Bindung oder Sauerstoff, bevorzugt eine chemische Bindung.

Die Verbindungen der Formel I sind in einem mehrstufigen Herstellverfahren zugänglich. Als Ausgangsverbindung dient eine metallierte Zinnverbindung der Formel II, in der die Reste die oben angegebene Bedeutung haben. Bevorzugt steht $R^5$ für Phenyl oder Methyl, M für Lithium oder Natrium. Die Verbindungen der Formel II sind in an sich bekannter Weise durch Umsetzung der entsprechenden Halogenstannane, insbesondere der Jodstannane, mit Alkalimetallorganylen wie Butyllithium oder Methyllithium zugänglich. Die Verbindungen der Formel II werden mit einer Heteroatomverbindung der Formel III umgesetzt. Diese Verbindungen tragen ein Halogenatom wie Fluor, Chlor, Brom und Jod, bevorzugt ist Chlor. Sie sind in an sich bekannter Weise beispielsweise durch Umsetzung von Phosphor- oder Arsenhalogenverbindungen mit metallierten Kohlenwasserstoffverbindungen unter Abspaltung von Metallhalogenid zugänglich. Die Verbindungen der Formeln II und III werden bevorzugt in stöchiometrischen Mengen umgesetzt. In einer bevorzugten Ausführungsform wird die Reaktion in einem inerten Lösungsmittel wie Toluol, Hexan oder Gemischen dieser Lösungsmittel durchgeführt. Die Ausgangsverbindungen werden in der Kälte, beispielsweise bei -70 bis -20°C miteinander versetzt. Nach Beendigung der Reaktion kann die entsprechende Verbindung der Formel IV nach bekannten Methoden, z.B. Extraktion des angefallenen Alkalimetallhalogenids mit Wasser, Trocknen der organischen Phase und Kristallisation, gegebenenfalls nach einem Wechsel des Lösungsmittels, isoliert werden.

Die so erhaltene Verbindung der Formel IV wird mit einer Alkalimetallorganylverbindung umgesetzt. Bevorzugt wird Phenyllithium eingesetzt, es kommen aber auch Verbindungen wie Butyllithium und Methyllithium in Betracht. Bevorzugt werden stöchiometrische Mengen der Alkalimetallorganylverbindung eingesetzt. Überschüsse können verwendet werden, müssen jedoch vor einer weiteren Umsetzung zerstört werden. Besonders bevorzugt ist die Abspaltung von Tetraphenylstannan aus Verbindung IV, da diese Verbindung leicht kristallisiert und so in einfacher Weise vom

Reaktionsansatz abtrennbar ist. Anschließend wird dem Reaktionsgemisch eine Verbindung der Formel V zugesetzt, die in Analogie zu den Verbindungen der Formel III erhältlich sind. Auch für diese Umsetzung ist eine stöchiometrische Umsetzung der Ausgangsverbindungen bevorzugt. In einer bevorzugten Ausführungsform wird die Verbindung der Formel V dem Reaktionsansatz bei Temperaturen von -70 bis -20°C zugesetzt. Nach Extraktion mit Wasser wird das Produkt durch Kristallisation aus der organischen Phase isoliert.

Im einzelnen sind als Verbindungen I, bevorzugt Bis(dimenthylphosphino)methan zu nennen, weiterhin Bis (di-tert.-butylphosphino)methan, (Dimenthylphosphino)(diphenylphosphino)methan, (Dimenthylphosphino)(di-tert.-butylphosphino)methan und (Di-tert.-butylphosphino) (diphenylphosphino)methan sowie Verbindungen, in denen die Reste $R^1$ und $R^2$ für Menthyl und $R^3$ und $R^4$ für Phenyl oder $C_4$-$C_{14}$-Kohlenwasserstoffreste stehen, die in beta-Stellung zu $E^2$ ein tertiäres Kohlenstoffatom aufweisen.

Das erfindungsgemäße Verfahren ermöglicht die Herstellung gesuchter methylenverbrückter Heteroatomverbindungen der Gruppe 15 des Periodischen Systems der Elemente in hohen Ausbeuten.

Beispiele

a) Herstellung von $(men)_2P$-$CH_2$-$SnPh_3$ (men=Menthyl)

Menthyl steht für den Rest

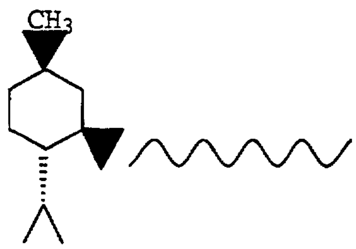

$$(men)_2PCl + LiCH_2\text{-}SnPh_3 \rightarrow (men)_2P\text{-}CH_2\text{-}SnPh_3 + LiCl$$

Zu einer Lösung von 21,27 g (43,32 mmol) $ICH_2$-$SnPh_3$ in 200 ml Toluol wurden bei -55°C innerhalb von 30 min 16,05 ml einer 2,7-molaren Lösung von Butyllithium (43,32 mmol) in Hexan getropft, das Gemisch 30 min gerührt und anschließend ebenfalls bei -55 °C langsam mit einer Lösung von 14,94 g (43,32 mmol) $(men)_2PCl$ in 60 ml Toluol versetzt. Danach wurde die Reaktionslösung vorsichtig erwärmt, 2 h bei -15°C sowie 1 h bei RT gerührt, auf O°C abgekühlt und mit 50 ml $H_2O$ versetzt. Anschließend wurden die Phasen getrennt, die organische Phase zweimal mit je 50 ml $H_2O$ gewaschen unter Rühren 5 min über $Na_2SO_4$ getrocknet. Nach der Filtration wurde das Lösungsmittel im Vakuum abdestilliert, der Rückstand mit 200 ml warmen Pentan extrahiert, die Lösung in der Siedehitze bis zur beginnenden Kristallisation eingeengt und langsam auf -18°C abgekühlt. Es entstand ein farbloser, flockiger, hydrolyseempfindlicher Niederschlag, der abfiltriert und im Vakuum getrocknet wurde. Einengen der Mutterlauge auf ca. 30 ml und Abkühlen auf -18°C lieferte weiteres Produkt.

| | |
|---|---|
| Ausbeute | 20,16 g(69%) |
| Schmelzpunkt | 120-121°C |

$^{13}C$-NMR ($C_6D_6$):

δ 139,54 (d,J(PC) 1,8,J($^{117/119}SnC$) = 485,6 Hz, ipso-C von $C_6H_5$), 137,59 (d,J(PC) = 1,3,J($^{117/119}SnC$) = 35,9 Hz, ortho-C von $C_6H_5$), 129,20 (s,para-C von $C_6H_5$), 128,79 (s,J($^{117/119}SnC$) = 50,1 Hz, meta-C von $C_6H_5$), 45, 82 (d,J(PC) = 19,2 Hz, CH von men), 44,76 (d,J(PC) = 9,4 Hz, CH von men), 40,20 (d,J(PC) = 19,1 Hz, CH von men), 39,11 (s, $CH_2$ von men), 36,28 (s, $CH_2$ von men), 35,33 (s, $CH_3$ von men), 35,22 (s, $CH_2$ von men, 33,91 (s, CH von men), 33,69 (d,J(PC) = 23,8 Hz, CH von men), 33,66 (s, CH von men), 28,07 (s, CH von men), 27,60 (d,J(PC)6,4 Hz, CH von men), 26,13 (d,J(PC) = 8,4 Hz, $CH_2$ von men), 25,52 (d,J(PC) = 6,3

Hz, $CH_2$ von men), 23,22, 22,98, 22,19, 21,97, 16,10, 15,67, (jeweils s, $CH_3$), 0,46 {d,J(PC) = 45,6 Hz, P-$CH_2$).
$^{31}$P-NMR ($C_6D_6$) : δ-31,87(s,J($^{117/119}$SnP)=115,5 Hz)

b) Herstellung von $(men)_2P-CH_2-P(men)_2$

$$(men)_2P-CH_2SnPh_3 \xrightarrow[-\ SnPh_4\ -\ LiCl]{+\ PhLi\ +\ (men)_2PCl} (men)_2P-CH_2-P(men)_2$$

Eine Lösung von 13,20 g (19,60 mmol), $(men)_2P-CH_2-SnPh_3$ in 200 ml $Et_2O$ wurde bei 20°C innerhalb von 30 min mit 11,04 ml einer 1,73-molaren Lösung von Phenyllithium (19,10 mmol) in Diethylether/Cyclohexan (30:70) versetzt und 45 min gerührt. Bereits nach wenigen Minuten begann $SnPh_4$ in Form eines farblosen Feststoffs auszufallen. Anschließend wurde das Reaktionsgemisch auf -25°C gekühlt und innerhalb von 45 min eine Lösung von 6,59 g (19,10 mmol) $(men)_2PCl$ in 100 ml $Et_2O$ zugetropft. Man ließ weitere 60 min bei -25°C rühren, entfernte das Kältebad und destillierte, sobald das Gemisch Raumtemperatur erreicht hatte, das Solvens im Vakuum ab. Der Rückstand wurde mit 250 ml Pentan extrahiert und das Extrakt mit 50 ml $H_2O$ versetzt. Anschließend wurden die Phasen getrennt, die organische Phase zweimal mit je 50 ml $H_2O$ gewaschen und über $Na_2SO_4$ getrocknet. Nach Filtration wurde das Lösungsmittel im Vakuum abdestilliert und der Rückstand aus 170 ml Propanol umkristallisiert. Man erhielt einen farblosen, luftempfindlichen Feststoff.

| | |
|---|---|
| Ausbeute | 7,84 g(65%) |
| Schmelzpunkt | 161-163°C |

$^{13}$C-NMR ($C_6D_6$): δ 46,79 (vt,N = 20,5 Hz, CH), 44,84 (vt,N = 11,2 Hz,CH), 40,45 (s, $CH_2$ von men), 40,11 (vt,N = 9,8 Hz,CH), 36,82 (s, $CH_2$ von men), 35,43 (s, $CH_2$ von men), 35,34 (s, $CH_2$ von men), 34,24 (s, 2x CH), 33,07 (vt,N = 22,7 Hz, CH), 28,00 (vt,N = 22,3 Hz,CH), 27,70 (vt,N = 26,1 Hz, CH), 26,28 (vt,N = 7,9 Hz,$CH_2$ von men), 25,56 (vt,N = 6,1 Hz,$CH_2$ von men), 23,19, 23,00, 22,39, 21,78, 15,72, 15,56 (jeweils s, $CH_3$), 11,80 (t,J(PC) = 28,5 Hz), P-$CH_2$-P). v steht für virtuelles Spinsystem.
$^{31}$P-NMR ($C_6D_6$): δ-36,73 (s).

## Patentansprüche

1. Verfahren zur Herstellung von methylenverbrückten Verbindungen der Formel I

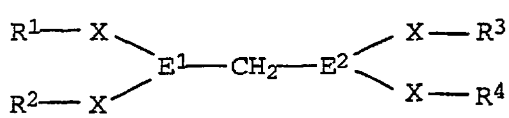

I

in der die Reste $R^1$ bis $R^4$ gleich oder verschieden sind und für gesättigte $C_1$-$C_{30}$-Kohlenwasserstoffreste, für Phenyl, für mit 1 bis 5 unter den Reaktionsbedingungen inerten Substituenten substituiertes Phenyl oder Wasserstoff, in der die Reste $E^1$ und $E^2$ gleich oder verschieden sind und für Phosphor, Arsen oder Antimon stehen und in der X für eine chemische Bindung oder für Sauerstoff steht, **dadurch gekennzeichnet, daß** man eine Zinnverbindung der allgemeinen Formel II

$$R^5_3Sn—CH_2M \qquad II$$

in der die Reste $R^5$ für einen $C_1$-$C_{20}$-Kohlenwasserstoffrest und M für ein Alkalimetall stehen, mit einer Verbindung der allgemeinen Formel III

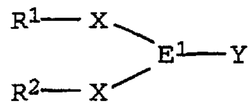

III

in der Y für ein Halogenatom steht, umsetzt, die so erhaltene Zinnverbindung der allgemeinen Formel IV

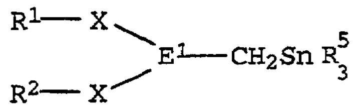

IV

mit einer Alkalimetallorganylverbindung metalliert und mit einer Verbindung der allgemeinen Formel V

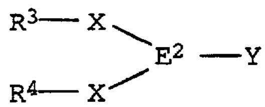

V

zu einer methylenverbrückten Verbindung der Formel I umsetzt.

2. Verfahren nach Anspruch 1, **dadurch gekennzeichnet, daß** die Reste $E^1$ und $E^2$ für Phosphor stehen.

3. Verfahren nach Anspruch 1 oder 2, **dadurch gekennzeichnet, daß** die Reste $R^1$ bis $R^4$ für einen gesättigten $C_4$-$C_{14}$-Kohlenwasserstoffrest stehen.

4. Verfahren nach den Ansprüchen 1 bis 3, **dadurch gekennzeichnet, daß** mindestens einer der Reste $R^1$ bis $R^4$ ein tertiäres Kohlenstoffatom in beta-stellung zu $E^1$ oder $E^2$ aufweist.

5. Verfahren nach den Ansprüchen 1 bis 4,**dadurch gekennzeichnet, daß** der Rest $R^5$ für Phenyl oder Methyl steht.

6. Verfahren nach den Ansprüchen 1 bis 5, **dadurch gekennzeichnet, daß** X für eine chemische Bindung steht.

7. Verfahren nach den Ansprüchen 1 bis 6, **dadurch gekennzeichnet, daß** M für Lithium oder Natrium steht.

8. Verfahren nach den Ansprüchen 1 bis 7, **dadurch gekennzeichnet, daß** Y für Chlor steht.

9. Verfahren nach den Ansprüchen 1 bis 8, dadurch gegenzeichnet, daß die Reste $R^1$ und $R^2$ für Menthyl und die Reste $R^3$ und $R^4$ für Phenyl oder gesättigte $C_4$-$C_{14}$-Kohlenwasserstoffreste stehen, die ein tertiäres Kohlenstoffatom in beta-Stellung zu $E^2$ aufweisen.

10. Bis(dimenthylphosphino)methan, (Dimenthylphosphino) (diphenylphosphino)methan, (Dimenthylphosphino) (di-tert.-butylphosphino)methan.

## Claims

1. A process for the preparation of methylene-bridged compounds of the formula I

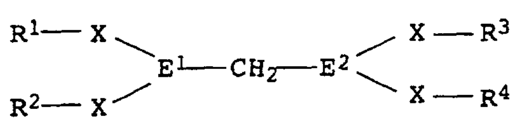

I

where $R^1$ to $R^4$ are identical or different and are each saturated $C_1$-$C_{30}$-hydrocarbyl, phenyl, phenyl substituted by 1 to 5 substituents inert under the reaction conditions, or hydrogen, $E^1$ and $E^2$ are identical or different and are each phosphorus, arsenic or antimony, and X is a chemical bond or oxygen, which comprises reacting a tin compound of the general formula II

$$R^5_3Sn—CH_2M \qquad II,$$

where $R^5$ is $C_1$-$C_{20}$-hydrocarbyl and M is an alkali metal, with a compound of the general formula III

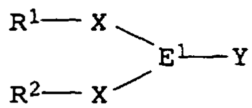

III,

where Y is halogen, metallating the thus-obtained tin compound of the general formula IV

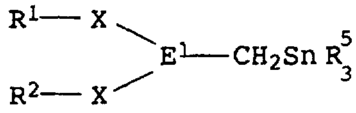

IV

with an alkali organometallic, and reacting the product with a compound of the general formula V

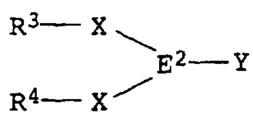

V

to give a methylene-bridged compound of the formula I.

**2.** A process as claimed in claim 1, wherein $E^1$ and $E^2$ are each phosphorus.

**3.** A process as claimed in claim 1 or 2, wherein $R^1$ to $R^4$ are each saturated $C_4$-$C_{14}$-hydrocarbyl.

**4.** A process as claimed in any of claims 1 to 3, wherein at least one of the radicals $R^1$ to $R^4$ has a tertiary carbon beta to $E^1$ or $E^2$.

**5.** A process as claimed in any of claims 1 to 4, wherein $R^5$ is phenyl or methyl.

**6.** A process as claimed in any of claims 1 to 5, wherein X is a chemical bond.

**7.** A process as claimed in any of claims 1 to 6, wherein M is lithium or sodium.

**8.** A process as claimed in any of claims 1 to 7, wherein Y is chlorine.

**9.** A process as claimed in any of claims 1 to 8, wherein $R^1$ and $R^2$ are each menthyl and $R^3$ and $R^4$ are each phenyl or saturated $C_4$-$C_{14}$-hydrocarbonyl having a tertiary carbon beta to $E^2$.

**10.** Bis(dimenthylphosphino)methane,
(dimenthylphosphino)(diphenylphosphino)methane,
(dimenthylphosphino)(di-tert.-butylphosphino)methane.

## Revendications

1. Procédé de préparation de composés comportant un pont méthylène de formule I

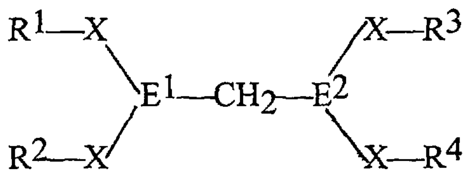

(I)

dans laquelle les radicaux $R^1$ à $R^4$ sont identiques ou différents et représentent chacun un radical hydrocarboné saturé en $C_1$ à $C_{30}$, un groupe phényle, un groupe phényle substitué par 1 à 5 substituants inertes dans les conditions de la réaction, ou un atome d'hydrogène, où les radicaux $E^1$ et $E^2$ sont identiques ou différents et représentent chacun le phosphore, l'arsenic ou l'antimoine, et où X est une liaison chimique ou un atome d'oxygène, **caractérisé en ce qu'**on fait réagir un composé de l'étain de formule générale II

$$R^5{}_3Sn—CH_2M \quad \text{(II)}$$

dans laquelle les radicaux $R^5$ sont des radicaux hydrocarbonés en $C_1$ à $C_{20}$, et M est un métal alcalin, avec un composé de formule générale III

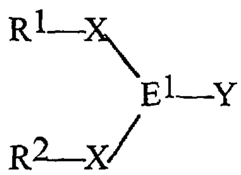

(III)

dans laquelle Y est un atome d'halogène, on soumet à une métallation le composé de l'étain ainsi obtenu de formule générale IV

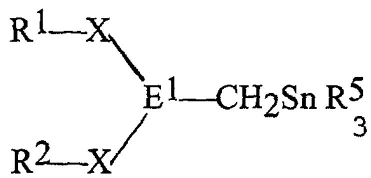

(IV)

à l'aide d'un composé organique d'un métal alcalin, et on le fait réagir avec un composé de formule générale V

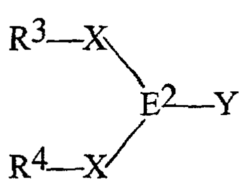

(V)

pour obtenir un composé de formule I comportant un pont méthylène.

2. Procédé selon la revendication 1, **caractérisé en ce que** les radicaux $E^1$ et $E^2$ sont des atomes de phosphore.

3. Procédé selon la revendication 1 ou 2, **caractérisé en ce que** les radicaux $R^1$ à $R^4$ sont des radicaux hydrocarbonés saturés en $C_1$ à $C_{14}$.

4. Procédé selon les revendications 1 à 3, **caractérisé en ce qu'**au moins l'un des radicaux $R^1$ à $R^4$ comporte un atome de carbone tertiaire en position $\beta$ par rapport à $E^1$ ou $E^2$.

5. Procédé selon les revendications 1 à 4, **caractérisé en ce que** le radical $R^5$ est le groupe phényle ou méthyle.

6. Procédé selon les revendications 1 à 5, **caractérisé en ce que** X est une liaison chimique.

7. Procédé selon les revendications 1 à 6, **caractérisé en ce que** M est le lithium ou le sodium.

8. Procédé selon les revendications 1 à 7, **caractérisé en ce que** Y est le chlore.

9. Procédé selon les revendications 1 à 8, **caractérisé en ce que** les radicaux $R^1$ et $R^2$ sont des groupes menthyle et les radicaux $R^3$ et $R^4$ sont des groupes phényle ou des radicaux hydrocarbonés saturés en $C_4$ à $C_{14}$, qui comportent un atome de carbone tertiaire en position $\beta$ par rapport à $E^2$.

10. Bis(dimenthylphosphino)méthane, (dimenthylphosphino)(diphénylphosphino)méthane, (dimenthylphosphino)(di-tert-butylphosphino)méthane.